(19) Europäisches Patentamt
European Patent Office
Office européen des brevets

(11) **EP 2 011 892 A1**

(12) **EUROPEAN PATENT APPLICATION**
published in accordance with Art. 153(4) EPC

(43) Date of publication:
**07.01.2009 Bulletin 2009/02**

(21) Application number: **07741918.2**

(22) Date of filing: **19.04.2007**

(51) Int Cl.:
*C22C 38/00* (2006.01) *C22C 38/22* (2006.01)
*C21D 6/00* (2006.01) *F02F 5/00* (2006.01)
*F16J 9/26* (2006.01) *C22C 38/60* (2006.01)

(86) International application number:
**PCT/JP2007/058482**

(87) International publication number:
**WO 2007/123164 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.04.2006 JP 2006116254**

(71) Applicant: **Hitachi Metals, Limited**
**Tokyo 105-8614 (JP)**

(72) Inventors:
- **OHISHI, Katsuhiko**
  **Yonago-shi, Tottori 683-0842 (JP)**
- **UEHARA, Toshihiro**
  **Yonago-shi, Tottori 683-0003 (JP)**
- **KUBOTA, Kunichika**
  **Yatsuka-gun, Shimane 699-0110 (JP)**

(74) Representative: **Strehl Schübel-Hopf & Partner**
**Maximilianstrasse 54**
**80538 München (DE)**

(54) **PISTON RING MATERIAL FOR INTERNAL COMBUSTION ENGINE**

(57) A piston ring material that when formed into a piston ring product, maintains excellent properties, and that at the production of piston ring rod, realizes excellent processability and shape stability. There is provided a piston ring material for internal combustion engine comprising, by mass, 0.5 to less than 0.7% C, 1.0% or less Si, 1.0% or less Mn, 12.0 to 16.0% Cr, 3.0% or less Mo and/or W (Mo + 1/2W), 0.02 to 0.14% N and the balance Fe and unavoidable impurities, wherein the relationship of contained C, N and Cr satisfies the formulae: $25 \leqq 43.22C (\%) + 42.45N (\%) - 0.02Cr (\%) \leqq 40$, and $0.15 \leqq 0.92C (\%) + 0.67N (\%) - 0.03Cr (\%) \leqq 0.30$.

FIG. 3

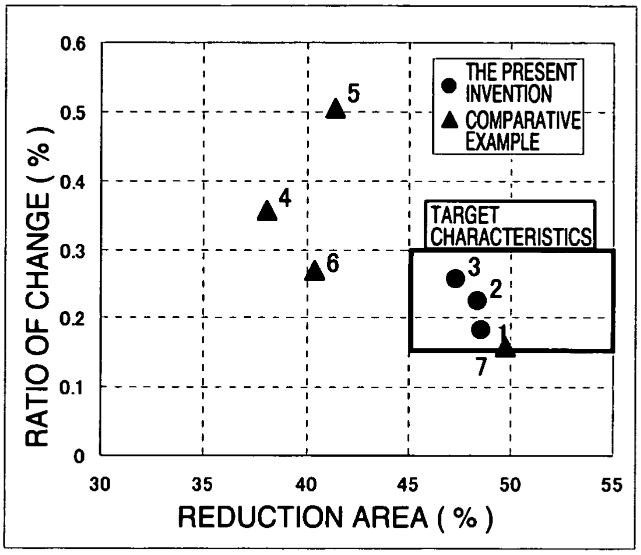


EP 2 011 892 A1

## Description

Technical Field

The present invention relates to a piston ring used for internal combustion engine or a piston ring used with its sliding surface being subjected to nitriding treatment, and particularly to a material having excellent characteristics as a piston ring in addition to cold drawing or rolling workability at the production of piston ring.

Background Art

As for piston rings for internal combustion engines, particularly, motorcar engines, use of conventional piston rings made of cast iron is gradually switched to use of so-called steel piston rings obtained by working rod materials such as steel flat rods into rings. This is due to the necessity to make thinner the rings or improve mechanical strength of the rings for meeting the demands such as weight-saving, decrease of fuel cost, speeding up and increase of output of internal combustion engines. Another large factor is the effect of conspicuous shortening of steps for production of rings.

The switching to steel piston rings has already been carried out in top rings and oil rings which are used under high load, and Si-Cr steels or martensitic stainless steels of 11-17% Cr have been used as materials of the piston rings. Furthermore, there are used many of piston rings made of the above materials which are subjected to chromium plating or nitriding treatment. Generally, piston ring materials are required to have scuffing resistance and wear resistance, and these characteristics tend to improve with increase of the amount of carbides resulting from increase of amounts of Cr and C added, and with coarsening of carbides. However, carbides in such form cause deterioration of fatigue characteristics of piston ring materials and further cause breakage of piston rings when the piston ring materials are worked into rods, and the rods are subjected to bending to form rings.

Under the circumstances, there is disclosed an invention in which a piston ring material having both fatigue characteristics and scuffing resistance after nitriding treatment is provided by adding in combination nitrogen N and carbon C to a martensitic stainless steel (Patent Document 1). Furthermore, based on the technology of adding N to a martensitic stainless steel and fining Cr carbide, it is disclosed to provide a nitrided piston ring made of martensite steel which is excellent in wear resistance, scuffing resistance, cracking resistance and fatigue characteristics, by fining the nitride in the nitrided layer to allow the nitride to be present in a large amount and besides forming a microstructure where lamellar grain boundary compounds in the nitrided layer are in fine state (Patent Document 2).

Patent Document 1: JP-A-2001-271144
Patent Document 2: JP-A-2002-030394

Disclosure of Invention

Problem to be solved by the Invention

As one example of general production steps for piston ring, an ingot adjusted to a desired composition is produced, and the ingot is subjected to hot rolling, annealing, cold drawing, and cold rolling to give a desired sectional shape of piston ring, then quenching and tempering, and coiling into a shape of ring. Thereafter, the ring is subjected to a strain-removing heat treatment for removing residual stress accumulated in the material, a rough working, a pre-nitriding acid treatment, a gas nitriding, a working for removal of side nitrided layer, and a finishing working. The resulting piston ring comprising the N-added steel is excellent in mechanical strength, particularly, wear resistance, scuffing resistance and fatigue characteristics, but are inferior in cold workability such as drawing or rolling in rod working to require many annealing steps in the working steps, resulting in a problem of increase in cost. Another problem is that the shape becomes unstable after the strain-removing heat treatment conducted for removal of residual stress in the material. Thus, further improvement is required.

The object of the present invention is to provide a piston ring material which maintains excellent mechanical properties when formed into a piston ring product, is improved in cold drawing and rolling workability at production of piston ring rod, can reduce production cost of piston ring, and has shape stability after the strain-removing heat treatment.

Means for Solving the Problem

The inventors have conducted intensive research on the influence of components on cold workability in production of piston ring. They have further conducted intensive research on the influence of components on shape stability in the strain-removing heat treatment. As a result, it has been found that extremely excellent cold workability and shape stability even after the strain-removing heat treatment can be obtained without damaging the mechanical characteristics as a piston ring by severely controlling amounts of C, Cr and N which are main constituent elements of the piston ring material and which form carbide and nitride, and furthermore by severely controlling mutual relation of the amounts of the elements. Thus, the present invention has been accomplished.

That is, the present invention relates to a piston ring material for internal combustion engine which contains, by mass, 0.5% or more and less than 0.7% of C, 1.0% or less of Si, 1.0% or less of Mn, 12.0-16.0% of Cr, 3.0% or less of Mo and/or W (Mo + 1/2W), and 0.02-0.14% of N, with the balance Fe and unavoidable impurities, wherein the relationship of the contained C, N and Cr satisfies the formulas of $25 \leqq 43.22C (\%) + 42.45N (\%) - 0.02Cr (\%) \leqq 40$ and $0.15 \leqq 0.92C (\%) + 0.67N (\%) - 0.03Cr (\%) \leqq 0.30$.

Preferably, the piston ring material satisfies one or more ranges, by mass, of 0.60-0.68% of C, 0.1-1.0% of Si, 14.0-16.0% of Cr, more than 1.5% and 3.0% or less (more preferably 1.6-2.5%) of Mo and/or W (Mo + 1/2W), and 0.04-0.13% of N, or furthermore the relationship of the contained C, N and Cr satisfies the formulas of $29 \leqq 43.22C (\%) + 42.45N (\%) - 0.02Cr (\%) \leqq 35$ and/or $0.18 \leqq 0.92C (\%) + 0.67N (\%) - 0.03Cr (\%) \leqq 0.30$. Of course, a piston ring material which satisfies all of these requirements is desirable. Furthermore, it is desirable to select Mo from Mo and/or W.

Advantages of the Invention

The piston ring material according to the present invention maintains excellent characteristics when formed into a piston ring product, and has excellent cold workability and shape stability at production of piston ring rod. Therefore, the present invention contributes largely to improvement of performance of piston ring, and simplification of production steps, namely, reduction of cost.

Best Mode for Carrying Out the Invention

The feature of the present invention is as follows. Based on the finding that particularly N which forms nitride gives a great influence on characteristics for C and Cr which form carbides and are main constituent elements of the piston ring material, a piston ring material excellent in cold workability at the production of piston ring and shape stability after heat treatment is provided by severely controlling the correlation of the above elements. The present invention will be explained in detail below.

C is an important element in the present invention, and not only C enhances scuffing resistance and wear resistance by forming carbides, but also a part of C forms solid solution in the base to improve strength and fatigue characteristics. For attaining these purposes, C must be added in an amount of at least 0.5%. However, if the content exceeds 0.7%, workability into rods or rings deteriorates. Especially, in the case of piston ring, since it is important to cheaply produce the piston ring by increasing productivity, the content is specified to be less than 0.7%. Preferred range is 0.60-0.68%.

Si is added usually as a deoxidizer, but it influences behavior of temper softening of steel, and influence of Si is important particularly for low alloy steels. Si is necessary for inhibiting temper softening and enhancing heat resistance. However, if Si is added in a too large amount, cold workability is deteriorated, and hence the upper limit of Si is specified to be 1.2%, and it is preferably 1.0%. On the other hand, the lower limit is preferably 0.1%.

Like Si, Mn is also an element necessary as a deoxidizer, and if it is added in a too large amount, hot workability is deteriorated. Therefore, the upper limit of Mn is specified to be 1.0%.

As for Cr, a part of Cr bonds to C to form a carbide to enhance wear resistance, and a part of Cr forms a solid solution in the base to enhance corrosion resistance. Furthermore, since Cr increases temper softening resistance, it is necessary for improving heat settling resistance of piston ring or ensuring hardenability to obtain sufficient hardness after heat treatment. When nitriding treatment is carried out, Cr has the effects to further improve scuffing resistance and wear resistance of the piston ring because of forming fine nitride in the nitrided layer. In order to obtain these effects, Cr must be added in an amount of at least 12.0%, but addition of it in a too large amount causes decrease of thermal conductivity to promote increase of contact surface temperature caused by sliding, thereby to damage seizing resistance and besides increase carbide or particle size to cause conspicuous deterioration of workability. Thus, the upper limit is specified to be 16.0%. Preferred range is 14.0-16.0%.

Not only Mn and W per se bond to C to form hard carbides, but also a part of Mn and W form solid solution in the Cr carbide, and hence the Cr carbide per se is toughened, resulting in improvement of wear resistance. Furthermore, they contribute as secondary hardening elements in tempering, and hence are effective for improving heat settling resistance of piston ring. Moreover, a steel piston ring material is generally heated to 900-1100°C for imparting wear resistance, scuffing resistance and fatigue characteristics of piston ring, and then hardened under rapid cooling, and thereafter tempered at a relatively high temperature to adjust the hardness to 35-45 HRC, and Mo and W have the effect to stabilize the hardened structure, which makes it possible to convert the secondary carbide precipitated at 900-1100°C to $M_{23}C_6$ having fine particle size, whereby precipitation of $M_7C_3$ can be inhibited. That is, by fixing the secondary carbide formed at a temperature of 900-1100°C, it becomes possible to obtain structure which is stable even when the hardening temperature somewhat changes.

For alloy steels comprising C and Cr in the amounts based on those of the present invention, the above heating temperature of about 1000°C is suitable for obtaining hardenability, namely, mechanical characteristics. That is, if the heating temperature is too low, sufficient hardness cannot be obtained, and, on the other hand, if it is too high, austenite particles become coarser to cause decrease of toughness. Therefore, considering balancing of these characteristics, the above hardening temperature range should be employed. Addition of Mo and W is necessary for obtaining the above effects, and particularly adjustment of the lower limit of their amounts is important. As for the lower limit of the amounts of Mo and/or W which are controlled by the formula (Mo + 1/2W), the amounts are preferably more than 1.5%, preferably 1.6% or more. However, addition of them in too large amounts not only results in increase of hard carbide and extreme increases of abrasion wear of cylinder, but also causes deterioration of workability. Therefore, the upper limit of the amounts of Mo and/or W which are controlled by the formula (Mo + 1/2W) is specified to be 3.0% in the present invention. It is preferably 2.5%. Mo can give the similar effect in an amount which is half the amount of W and furthermore has the effect to improve softening resistance, and can inhibit heat settling at tempering or strain-removing heat treatment. Therefore, from the point of advantageousness in cost and heat treatment characteristics, it is desirable to add Mo alone without addition of W.

N is an element which is relatively stable even at high temperatures and prevents eutectic Cr carbide ($M_7C_3$) difficult to control its form by hot working temperature or heat treatment temperature from crystallization into primary crystal austenite grain boundary. Thus, it becomes possible to inhibit conspicuous deterioration of scuffing resistance or deterioration of workability which is caused by the presence of coarse Cr carbide. Moreover, since N has the effect to make finer the carbide, not only fatigue characteristics, but also mechanical characteristics are improved, and tensile strength is improved without causing deterioration of workability. For obtaining this effect, at least 0.02% of N is necessary, but if it is added in a too large amount, gas pores are formed in steel ingot and furthermore ingot making in the air becomes difficult, resulting in increase of cost. Therefore, the amount of N is 0.14% or less. Preferred range is 0.04-0.13%.

In the piston ring material of the present invention, the remainder element other than the above elements is Fe, but naturally unavoidable impurities are present. Moreover, when impact stress is applied in using as a piston ring, Ni may be added in an amount of 2.0% or less for the purpose of improving toughness, and Cu may be added in an amount of 4% or less for the purpose of strengthening the matrix to improve heat settling resistance.

Moreover, in order to meet the further demand for wear resistance, there may be added at least one of V and Nb in an amount of 3.0% or less in total. Not only V and Nb form carbide by bonding to C, but also a part of them form solid solution in the Cr carbide to strengthen the carbide. Furthermore, Al may be added in an amount of 1.5% or less for improving the hardness of nitrided layer formed on the surface of steel by nitriding treatment conducted for the purpose of imparting wear resistance to a piston ring made of steel. In addition, Co may be added in an amount of 1.0% or less for improving corrosion resistance, and B may be added in an amount of 100 ppm or less for improving hardness of the matrix.

P and S which are impurity elements are preferably added in the amounts as small as possible, but in order to extremely reduce the amounts, selected expensive starting materials must be used, and, besides, high cost is required for refining by dissolution. However, in the present invention, they may be contained in the ranges of $P \leqq 0.1\%$ and $S \leqq 0.1\%$ which cause no particularly serious problems in characteristics and production.

In addition, the present invention provides a piston ring material which has not only mechanical characteristics as a piston ring product, but also cold workability at production of piston ring rod and furthermore shape stability after heat treatment. The greatest feature of the present invention resides in properly controlling the amounts of C, Cr and N contained for obtaining these characteristics. The reasons will be explained in detail below.

The cold workability of piston ring material at the production of rod depends largely upon amount or size of carbide in the steel, and is governed mainly by the contents of Cr and C. N is effective for fining the carbide, and furthermore, N per se forms fine nitride to prevent agglomeration and coarsening of nitride. Therefore, by controlling the amounts of the three elements within proper ranges, the workability can be improved with maintaining mechanical characteristics as piston ring product. As a result of conducting a research on the optimum relation among the amounts of C, Cr and N which can exhibit these effects to the maximum, it has been found that it can be evaluated by the relation using factors obtained by multiple regression analysis when workability is taken as objective variable and C, Cr and N are taken as explanatory variables, and thus it is necessary to severely control the relation.

That is, it is to control the contents of C, N and Cr in the steel to satisfy the formula: $25 \leqq 43.22C\ (\%) + 42.45N\ (\%) - 0.02Cr\ (\%) \leqq 40$. If this value is less than 25, workability is satisfactory, but mechanical characteristics, wear resistance and scuffing resistance as piston ring deteriorate, and if it is more than 40, workability deteriorates, and hence drawing and rolling at the production of rod material become difficult to require a plurality of annealing steps, resulting in increase of cost. Preferred range of the value according to the above formula is 29-35.

In the production of piston ring, after coiling into a shape of ring, a strain-removing heat treatment for removing residual stress accumulated in the material is carried out, and there is the problem of the shape becoming unstable after the treatment. It has been confirmed by the inventors that the mechanism of the changing of shape is affected by mainly the amount and size of the carbide in the steel as in the case of workability. As a result, the inventors have clarified that by mutual controlling, within proper ranges, of the amounts of Cr and C which form mainly carbide, and N which makes fine the carbide, stable shape can be obtained even after the strain-removing heat treatment with maintaining the mechanical characteristics as piston ring.

That is, it is to adjust the contents of C, Cr and N in the steel to satisfy the mutual relation of $0.15 \leqq 0.92C\ (\%) + 0.67N\ (\%) - 0.03Cr\ (\%) \leqq 0.30$ in the relation using proper factors obtained by multiple regression analysis when mechanical characteristic is taken as objective variable and C, Cr and N are taken as explanatory variables as in the above case. If this value is less than 0.15, shape stability cannot be obtained, and if it is more than 0.30, mechanical characteristics as piston ring deteriorate. Preferred range of the value according to the above formula is 0.18-0.30.

By properly adjusting C, Cr and N to satisfy the above two formulas, there can be provided a piston ring material having both characteristics of workability and shape stability without causing deterioration of product characteristics. As a result, it becomes possible to provide piston ring materials stable in characteristics.

For the piston ring material of the present invention having features in composition, it is desirable to apply to the ingot making step a process capable of carrying out micro-adjustment of components. For example, the dissolution step is preferably carried out with an induction furnace or vacuum furnace which causes less incorporation of impurities from the outside. Furthermore, in the casting step, there may be used re-dissolution method or continuous casting method which is advantageous for avoiding segregation or presence of non-metallic inclusions in addition to usual ingot making method.

Example 1

10 kg of ingots were prepared by high frequency vacuum induction dissolution. These ingots were subjected to hot working to make rod materials of 15 mm square. Subsequently, they were subjected to annealing, and thereafter to a given hardening treatment (1000-1060°C) and a given tempering treatment (600-640°C) to make Samples Nos. 1-7 adjusted to about 40 HRC in hardness. Values $\alpha$ and $\beta$ (see footnotes of Table 1) calculated from chemical composition of each sample and contents of C, Cr and N are shown in Table 1.

[Table 1]

| | Sample No. | Composition (mass%)[*1] | | | | | | | | | | α[*2] | β[*3] |
|---|---|---|---|---|---|---|---|---|---|---|---|---|---|
| | | C | Si | Mn | P | S | Cr | Mo | W | N | Fe | | |
| The present invention | 1 | 0.65 | 0.40 | 0.31 | 0.004 | 0.002 | 13.0 | 0.29 | <0.01 | 0.05 | Bal. | 29.956 | 0.242 |
| | 2 | 0.64 | 0.38 | 0.31 | 0.003 | 0.002 | 15.1 | 1.47 | <0.01 | 0.09 | Bal. | 31.179 | 0.196 |
| | 3 | 0.67 | 0.40 | 0.32 | 0.006 | 0.002 | 15.3 | 1.51 | <0.01 | 0.11 | Bal. | 33.321 | 0.231 |
| Comparative Example | 4 | 0.84 | 0.39 | 0.32 | 0.007 | 0.002 | 14.8 | 1.53 | <0.01 | 0.05 | Bal. | 38.131 | 0.362 |
| | 5 | 0.87 | 0.38 | 0.31 | 0.006 | 0.002 | 15.0 | 1.52 | <0.01 | 0.11 | Bal. | 41.971 | 0.424 |
| | 6 | 0.74 | 0.39 | 0.33 | 0.007 | 0.002 | 14.9 | 0.75 | <0.01 | 0.12 | Bal. | 36.779 | 0.314 |
| | 7 | 0.60 | 0.41 | 0.31 | 0.005 | 0.002 | 14.9 | 1.32 | <0.01 | 0.06 | Bal. | 28.181 | 0.145 |

*1 Al < 0.05%, Contents of other elements are less than 0.01%
*2 $\alpha$ = 43.22C (%) + 42.45N (%) - 0.02Cr (%)
*3 $\beta$ = 0.92C (%) + 0.67N (%) - 0.03Cr (%)

For evaluation of rod workability as piston ring material, reduction of area (%) in tensile test was measured. JIS 14A contraction type test pieces (whole length: 110 mm, length of parallel part: 45 mm, diameter of parallel part: 7 mm, distance between gages: 35 mm) were obtained from the material after annealing, and subjected to tensile test at room temperature to collect the values of reduction of area (%) of each sample. In the use as piston ring, when this value is 45% or more, there are no problems in cold drawing and rolling, and this value is employed as indication for excellent workability.

Next, for evaluation of shape stability of piston ring, the following V-shape bending test was conducted. A test piece of 3 mm square × 80 mm in length as shown in FIG. 1 was obtained from the material adjusted to 40 HRC in hardness, and markings were put on a side surface of the test piece at an interval of 50 mm. On the assumption that the test piece is worked into a ring, the test piece was indented at a fixed speed so that indentation reached 10 mm as shown in FIG. 2. The distance $L_0$ between the markings (average value of upper distance $L_{0A}$ and lower distance $L_{0B}$) was measured. Then, a heat treatment simulating the strain-removing heat treatment for removing the given residual stress was carried out at 600°C for 1 hour in Ar atmosphere, and thereafter the distance $L_1$ between the markings was again measured. Ratio of change was obtained from the thus obtained $L_0$, $L_1$ in accordance with the following formula.

$$\{(L_1 - L_0)/L_0\} \times 100\ (\%)$$

The inventors have confirmed that when this ratio of change at 600°C is in the range of 0.15-0.3%, there is no problem in shape stability in the use as piston ring. Therefore, 0.15-0.3% is employed as target value as an indication for shape stability.

Results of evaluation of the workability (reduction of area) and shape stability (ratio of change) are shown in FIG. 3. From the results, it can be seen that the piston ring materials of the present invention which were severely adjusted in the amounts of C, N and Cr were superior to the comparative materials in cold workability and shape stability before and after heat treatment.

Example 2

10 kg of ingots were prepared by high frequency vacuum induction dissolution. These ingots were subjected to hot working to make rod materials of 15 mm square. Subsequently, they were subjected to annealing, and thereafter to a given hardening treatment (1000-1060°C) and a given tempering treatment (600-640°C) to make Samples Nos. 8-13 adjusted to about 40 HRC in hardness. Values α and β (see footnotes of Table 2) calculated from chemical composition and contents of C, Cr and N of each sample are shown in Table 2.

[Table 2]

| | Sample No. | Composition (mass%)*1 | | | | | | | | | | α*2 | β*3 |
|---|---|---|---|---|---|---|---|---|---|---|---|---|---|
| | | C | Si | Mn | P | S | Cr | Mo | W | N | Fe | | |
| The present invention | 8 | 0.64 | 0.40 | 0.29 | 0.005 | 0.002 | 15.3 | 1.6 | <0.01 | 0.09 | Bal. | 31.175 | 0.190 |
| | 9 | 0.67 | 0.41 | 0.31 | 0.005 | 0.002 | 14.7 | 1.7 | <0.01 | 0.10 | Bal. | 32.908 | 0.242 |
| | 10 | 0.67 | 0.40 | 0.31 | 0.006 | 0.002 | 14.8 | 1.6 | <0.01 | 0.11 | Bal. | 33.331 | 0.246 |
| | 11 | 0.67 | 0.41 | 0.30 | 0.006 | 0.002 | 15.1 | 1.6 | <0.01 | 0.12 | Bal. | 33.749 | 0.244 |
| | 12 | 0.66 | 0.40 | 0.31 | 0.005 | 0.002 | 15.1 | 1.6 | <0.01 | 0.13 | Bal. | 33.742 | 0.241 |
| | 13 | 0.66 | 0.40 | 0.31 | 0.005 | 0.002 | 15.1 | 1.6 | <0.01 | 0.14 | Bal. | 34.166 | 0.248 |

*1 Al < 0.05%, Contents of other elements are less than 0.01%
*2 $\alpha$ = 43.22C (%) + 42.45N (%) - 0.02Cr (%)
*3 $\beta$ = 0.92C (%) + 0.67N (%) - 0.03Cr (%)

For evaluation of workability and shape stability of piston ring, the same tensile test and V-shape bending test as above were conducted. The results are shown in FIG. 4. From the results, it can be seen that the piston ring materials of the present invention which were severely adjusted in the amounts of C, N and Cr and contained Mo in a proper amount had stably both the characteristics of cold workability and shape stability before and after heat treatment.

Example 3

2600 kg of ingots were prepared by an atmospheric dissolution furnace. These ingots were subjected to hot working to make a rod material of 15 mm in diameter, which was referred to as Sample No.14. Values $\alpha$ and $\beta$ (see footnotes of Table 3) calculated from chemical composition and contents of C, Cr are shown in Table 3.

[Table 3]

| | Sample No. | Composition (mass%)*1 | | | | | | | | | | α*2 | β*3 |
|---|---|---|---|---|---|---|---|---|---|---|---|---|---|
| | | C | Si | Mn | P | S | Cr | Mo | W | N | Fe | | |
| The present invention | 14 | 0.64 | 0.38 | 0.29 | 0.024 | 0.002 | 14.8 | 1.6 | <0.01 | 0.11 | Bal. | 32.034 | 0.219 |

*1 Al < 0.05%, Contents of other elements are less than 0.01%
*2 α = 43.22C (%) + 42.45N (%) - 0.02Cr (%)
*3 β = 0.92C (%) + 0.67N (%) - 0.03Cr (%)

Successively, it was subjected to annealing, and thereafter to a given hardening treatment (1040°C) and a given tempering treatment (600-640°C) to make a rod material adjusted to about 40 HRC in hardness, and carbide distribution at longitudinal section was measured. A light microscope was used for the measurement to obtain the size of carbides (in terms of diameter of equivalent circle) in 6 visual fields of structure which were viewed at random at 200 × magnification (FIG. 5) and 1000 × magnification (FIG. 6). The viewing areas were $8 \times 10^{-3}$ $mm^2$ (200 × magnification) and $3.2 \times 10^{-3}$ $mm^2$ (1000 × magnification). The results of measurement are shown in FIG. 7 and FIG. 8. It can be seen from the results that most of the carbides formed in the material had a size of 1 μm or less and were finely distributed. In the piston ring material of the present invention, cold workability at the production of rod material and shape stability at the strain-removing heat treatment after coiling were both improved by the fining of carbides.

Brief Description of the drawings

[FIG. 1] This is a schematic view of shape of test piece used for V-shape bending test in Examples 1 and 2.
[FIG. 2] This is a schematic view showing method of V-shape bending test in Examples 1 and 2.
[FIG. 3] This shows the relation between cold workability (reduction of area) and shape stability (ratio of change) of piston ring materials of the present invention and the comparative example in Example 1.
[FIG. 4] This shows the relation between cold workability (reduction of area) and shape stability (ratio of change) of piston ring materials of the present invention in Example 2.
[FIG. 5] This is a structural photograph (200 x) of the piston ring material of the present invention in Example 3.
[FIG. 6] This is a structural photograph (1000 x) of the piston ring material of the present invention in Example 3.
[FIG. 7] This shows carbide size distribution (viewed at 200 × magnification) of the piston ring material of the present invention in Example 3.
[FIG. 8] This shows carbide size distribution (viewed at 1000 × magnification) of the piston ring material of the present invention in Example 3.

Description of Reference Numerals

1. Test piece (3 mm square × 80 mmL), 2. Markings, 3. Punch

**Claims**

1. A piston ring material for internal combustion engine which contains, by mass, 0.5% or more and less than 0.7% of C, 1.2% or less of Si, 1.0% or less of Mn, 12.0-16.0% of Cr, 3.0% or less of Mo and/or W (Mo + 1/2W), and 0.02-0.14% of N, with the balance Fe and unavoidable impurities, wherein the relationship of the contained C, N and Cr satisfies the formulas of $25 \leqq 43.22C (\%) + 42.45N (\%) - 0.02Cr (\%) \leqq 40$ and $0.15 \leqq 0.92C (\%) + 0.67N (\%) - 0.03Cr (\%) \leqq 0.30$.

2. The piston ring material for internal combustion engine according to claim 1, wherein C is contained in an amount of 0.60-0.68% by mass.

3. The piston ring material for internal combustion engine according to claim 1, wherein Cr is contained in an amount of 14.0-16.0% by mass.

4. The piston ring material for internal combustion engine according to claim 1, wherein N is contained in an amount of 0.04-0.13% by mass.

5. The piston ring material for internal combustion engine according to claim 1, wherein the relationship of the contained C, Cr and N by mass% satisfies the formulas of $29 \leqq 43.22C (\%) + 42.45N (\%) - 0.02Cr (\%) \leqq 35$.

6. The piston ring material for internal combustion engine according to claim 1, wherein the relationship of the contained C, Cr and N by mass% satisfies the formulas of $0.18 \leqq 0.92C (\%) + 0.67N (\%) - 0.03Cr (\%) \leqq 0.30$.

7. The piston ring material for internal combustion engine according to claim 1, wherein Mo and/or W (Mo + 1/2W) are contained in an amount of more than 1.5% and 3.0% or less by mass.

**8.** The piston ring material for internal combustion engine according to claim 1, wherein Mo and/or W (Mo + 1/2W) are contained in an amount of 1.6-2.5% by mass.

**9.** The piston ring material for internal combustion engine according to claim 1, 7 or 8, wherein Mo is selected from Mo and/or W.

**10.** The piston ring material for internal combustion engine according to claim 1, wherein Si is contained in an amount of 0.1-1.0% by mass.

**11.** A piston ring material for internal combustion engine which contains, by mass, 0.60-0.68% of C, 0.1-1.0% of Si, 1.0% or less of Mn, 14.0-16.0% of Cr, 1.6-2.5% of Mo, and 0.04-0.13% of N, with the balance Fe and unavoidable impurities, wherein the relationship of the contained C, Cr and N satisfies the formulas of $29 < 43.22C (\%) + 42.45N (\%) - 0.02Cr (\%) < 35$ and $0.18 < 0.92C (\%) + 0.67N (\%) - 0.03Cr (\%) 0.30$.

FIG. 1

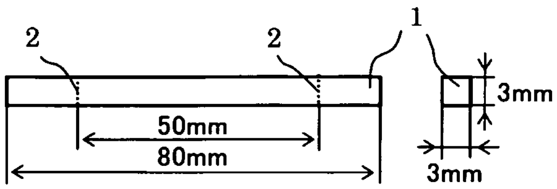
2
2
1
50mm
80mm
3mm
3mm

FIG. 2

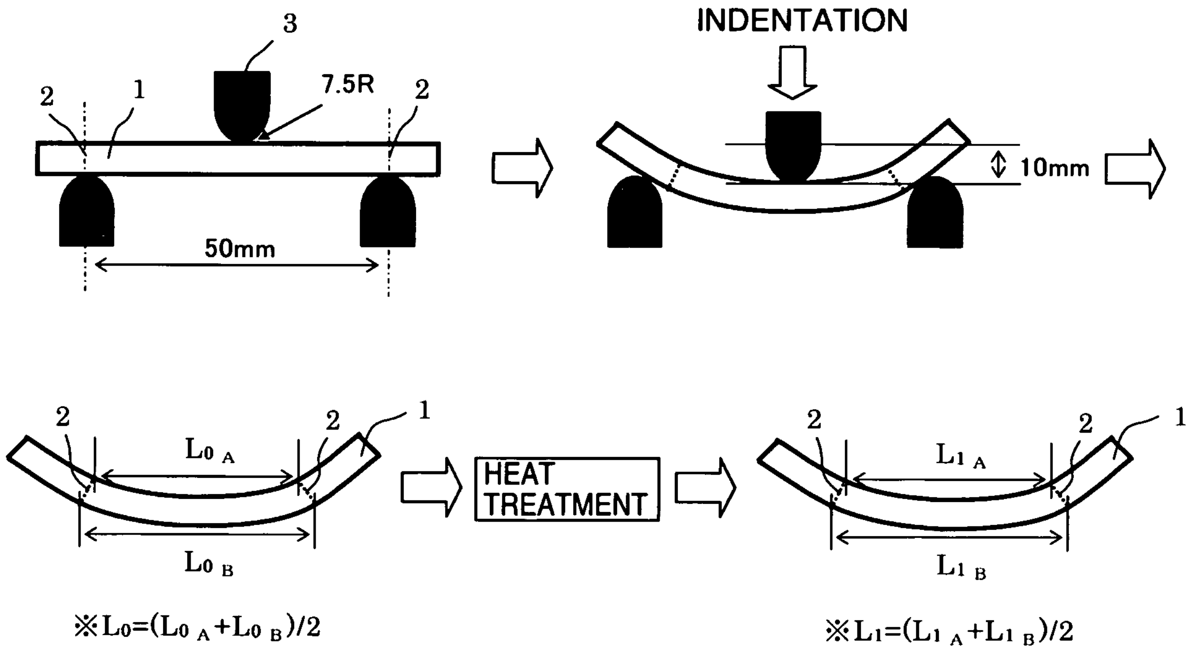
3
INDENTATION
2
1
7.5R
2
50mm
10mm
2
2
1
L0 A
L0 B
HEAT
TREATMENT
2
2
1
L1 A
L1 B
※L0=(L0 A+L0 B)/2
※L1=(L1 A+L1 B)/2

# FIG. 3

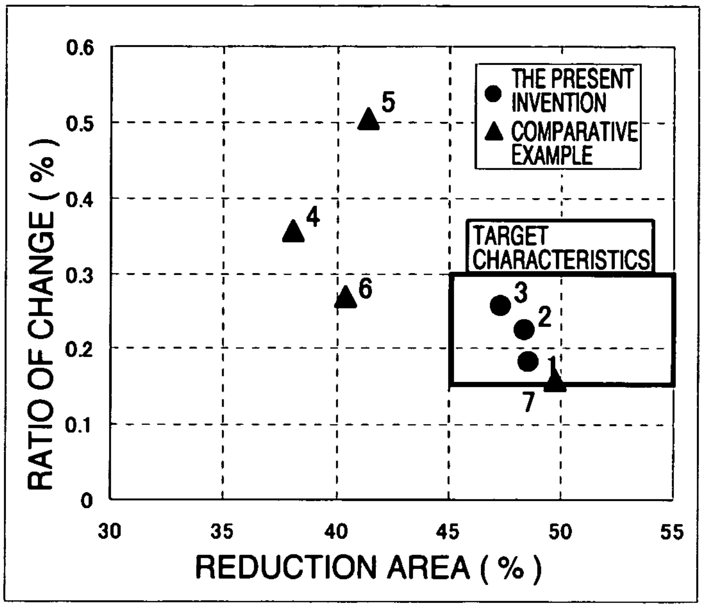
RATIO OF CHANGE ( % )
0.6
0.5
0.4
0.3
0.2
0.1
0
30
35
40
45
50
55
REDUCTION AREA ( % )
THE PRESENT INVENTION
COMPARATIVE EXAMPLE
TARGET CHARACTERISTICS
1
2
3
4
5
6
7

# FIG. 4

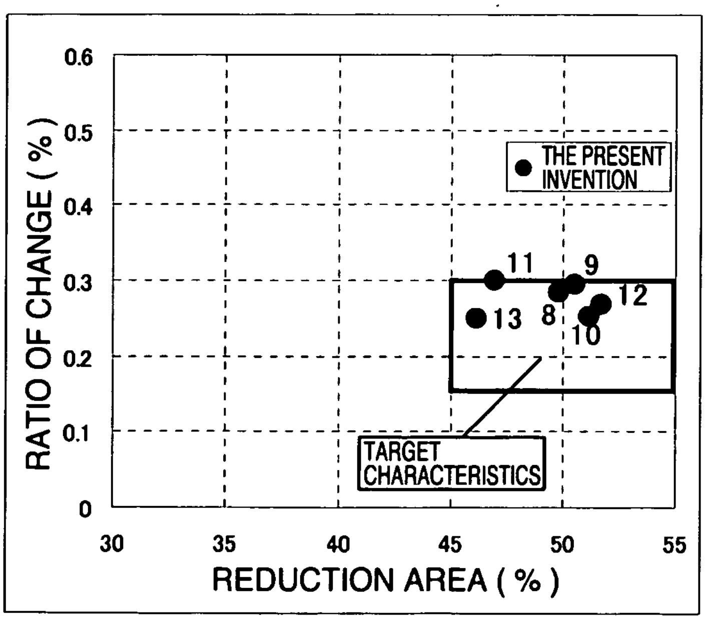
RATIO OF CHANGE ( % )
0.6
0.5
0.4
0.3
0.2
0.1
0
30
35
40
45
50
55
REDUCTION AREA ( % )
THE PRESENT INVENTION
TARGET CHARACTERISTICS
8
9
10
11
12
13

FIG. 5

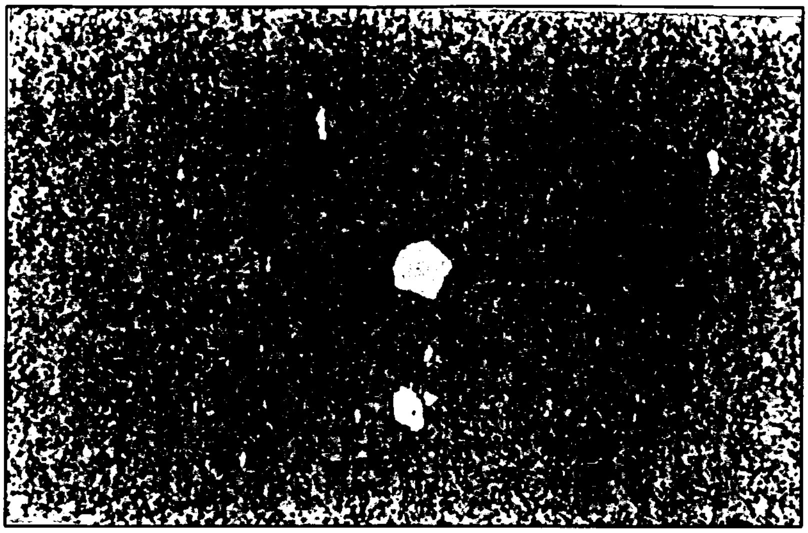

100μm

FIG. 6

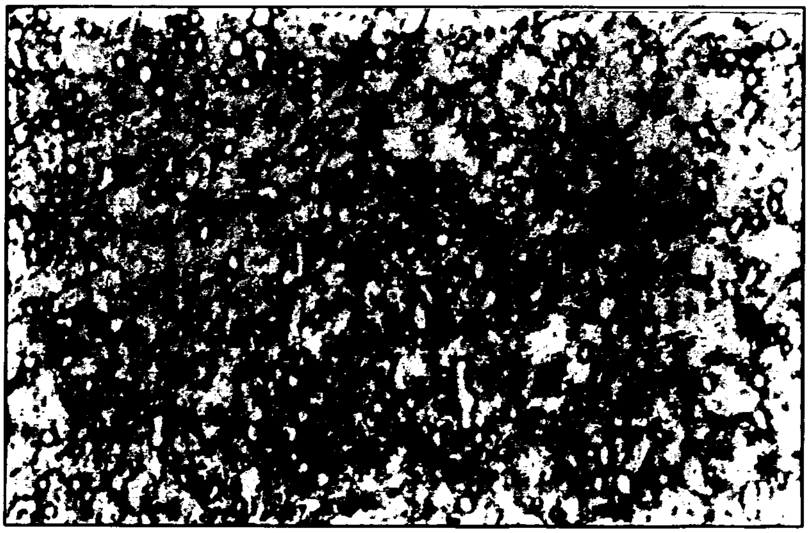

20μm

FIG. 7

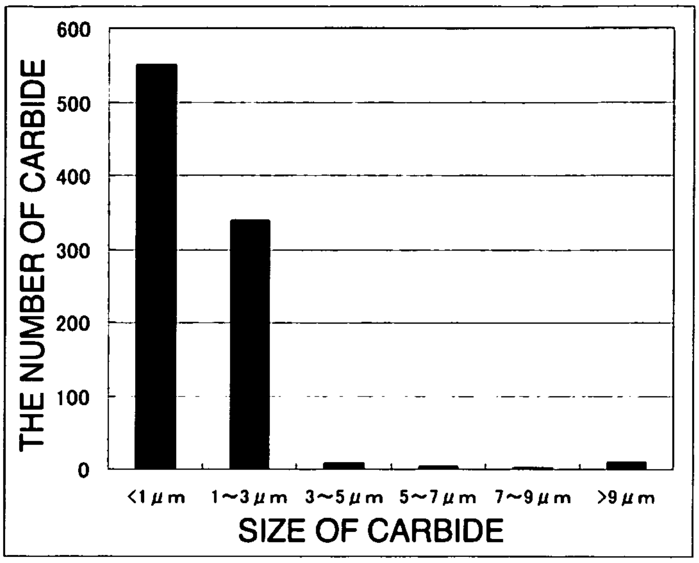
THE NUMBER OF CARBIDE
600
500
400
300
200
100
0
<1μm
1~3μm
3~5μm
5~7μm
7~9μm
>9μm
SIZE OF CARBIDE

FIG. 8

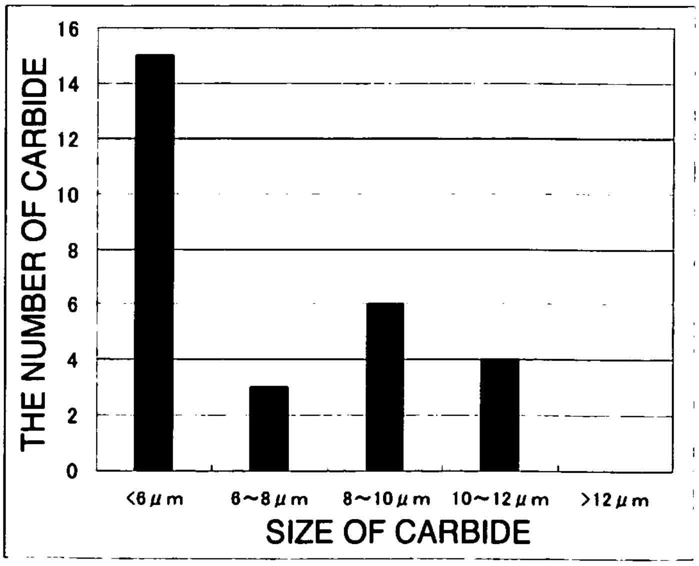
THE NUMBER OF CARBIDE
16
14
12
10
8
6
4
2
0
<6μm
6~8μm
8~10μm
10~12μm
>12μm
SIZE OF CARBIDE

**INTERNATIONAL SEARCH REPORT**

International application No.
PCT/JP2007/058482

A. CLASSIFICATION OF SUBJECT MATTER
*C22C38/00*(2006.01)i, *C22C38/22*(2006.01)i, *C21D6/00*(2006.01)i, *F02F5/00*(2006.01)i, *F16J9/26*(2006.01)i, *C22C38/60*(2006.01)n

According to International Patent Classification (IPC) or to both national classification and IPC

B. FIELDS SEARCHED

Minimum documentation searched (classification system followed by classification symbols)
C22C38/00-38/60, C21D6/00, F02F5/00, F16J9/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI(DIALOG)

C. DOCUMENTS CONSIDERED TO BE RELEVANT

| Category* | Citation of document, with indication, where appropriate, of the relevant passages | Relevant to claim No. |
|---|---|---|
| X<br>A | JP 3456028 B2 (Hitachi Metals, Ltd.),<br>14 October, 2003 (14.10.03),<br>Table 1 (No.5)<br>& EP 799902 A1 & US 5944920 A<br>& KR 97070226 A | 1,2,4-6,9,10<br>3,7,8,11 |
| X<br>A | JP 2552509 B2 (Aichi Steel Works Ltd., Toyota Motor Corp.),<br>13 November, 1996 (13.11.96),<br>Table 2 (symbol H)<br>(Family: none) | 1,2,4-6,9,10<br>3,7,8,11 |
| X<br>A | JP 58-46542 B2 (Hitachi Metals, Ltd.),<br>17 October, 1983 (17.10.83),<br>Table 1 (symbols B, D, F)<br>(Family: none) | 1-6,9,10<br>7,8,11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>25 June, 2007 (25.06.07) | Date of mailing of the international search report<br>03 July, 2007 (03.07.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2007/058482

C (Continuation). DOCUMENTS CONSIDERED TO BE RELEVANT

| Category* | Citation of document, with indication, where appropriate, of the relevant passages | Relevant to claim No. |
|---|---|---|
| A | JP 3452354 B2 (Nippon Koshuha Kogyo Kabushiki Kaisha, Tokusen Kogyo Co.,Ltd.), 29 September, 2003 (29.09.03), Claims (Family: none) | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001271144 A
- JP 2002030394 A